# EUROPÄISCHE PATENTSCHRIFT

(11) **EP 1 606 146 B1**
(45) Veröffentlichungstag und Bekanntmachung des Hinweises auf die Patenterteilung: **28.03.2007**
(21) Anmeldenummer: 03770913.6
(22) Anmeldetag: 17.10.2003
(51) Int. Cl.: B60R 21/01

(54) **VERFAHREN ZUR AUSLÖSUNG VON RÜCKHALTEMITTELN**
METHOD FOR TRIGGERING RESTRAINING MEANS
PROCEDE DE DECLENCHEMENT DE MOYENS DE RETENUE

(30) Priorität: 17.03.2003 DE 10311524
(43) Veröffentlichungstag der Anmeldung: 21.12.2005
(73) Patentinhaber: ROBERT BOSCH GMBH, 70442 Stuttgart (DE)
(72) Erfinder: THEISEN, Marc, 74354 Besigheim (DE); MUELLER, Ulrike, 71711 Murr (DE)
(86) Internationale Anmeldenummer: PCT/DE2003/003446
(87) Internationale Veröffentlichungsnummer: WO 2004/083001

(56) Entgegenhaltungen:
- DE-C- 10 138 764
- US-A- 5 189 311
- US-A- 5 497 327

## Beschreibung

### Stand der Technik

Die Erfindung geht aus von einem Verfahren zur Auslösung von Rückhaltemitteln nach der Gattung des unabhängigen Patentanspruchs.

Aus DE 101 38 764 C1 ist es bekannt, bei einem Verfahren zur Auslösung von Rückhaltemitteln eine Rauschschwelle vorzusehen, wobei das Verfahren erst beginnt, wenn ein Aufprallsignal, in Abhängigkeit dessen die Rückhaltemittel ausgelöst werden, diese Rauschschwelle überschreitet.

Aus US-5, 497 327 ist es bekannt, ab Überschreiten eines Schwellwerts g0, der eine Unfallsituation von normalen Fahrbewegungen unterscheiden soll, die Zeit, die das Signal über dieser Schwelle ist, zu zählen.

Ein Verfahren gemäß dem Oberbegriff von Anspruch 1 ist im Stand der Technik allgemein bekannt.

### Vorteile der Erfindung

Das erfindungsgemäße Verfahren zur Auslösung von Rückhaltemitteln mit den Merkmalen des unabhängigen Patentanspruchs hat demgegenüber den Vorteil, dass nunmehr die Zeit, die vor dem Überschreiten der Rauschschwelle des Rückhaltemittels, aber ab Aufprall verstrichen ist, bei der Bestimmung der Auslösezeiten für die einzelnen Rückhaltemittel berücksichtigt wird. Insbesondere, wenn bei einem Aufprall zunächst leicht deformierbare Teile des Fahrzeugs durch den Unfallgegner eingedrückt werden, kommt es hier zu keinen großen Aufprallsignalen, die beispielsweise durch einen Beschleunigungssensor erfasst werden. Erst, wenn der Unfallgegner beginnt die härteren Teile der Karosserie zu stauchen bzw. zu deformieren, kommt es zu deutlich stärkeren Beschleunigungssignalen. Dann wird die Rauschschwelle sicher überschritten und das erfindungsgemäße Verfahren beginnt, allerdings mit der Maßgabe, dass der Unfall bzw. Aufprall bereits einige Millisekunden vorher eingesetzt hat. Um zu einer besseren

Auslösung und zeitgerechteren Zündung der Rückhaltemittel zu kommen, wird erfindungsgemäß diese Zeit, die zwischen dem Aufprall und dem Überschreiten der Rauschschwelle, die üblicherweise bei 3 bis 6 g liegt, verstreicht, bei der Bestimmung der Auslösezeiten berücksichtigt. Das Aufprallsignal kann entweder ein Beschleunigungssignal, ein Drucksignal, ein Temperatursignal oder ein anderes Signal eines Verformungssensors oder auch ein Geschwindigkeitssignal sein.

Durch die in den abhängigen Ansprüchen vorgesehenen Maßnahmen und Weiterbildungen sind vorteilhafte Verbesserungen des im unabhängigen Patentanspruch angegebenen Verfahrens zum Auslösen von Rückhaltemitteln möglich.

Besonders vorteilhaft ist, dass die Berücksichtigung der Zeit zwischen dem Aufprall und dem Überschreiten der Rauschschwelle durch einen festen Zeitwert berücksichtigt wird, der bei der Bestimmung der Auslösezeiten für die jeweiligen Rückhaltemittel berücksichtigt wird. Es kommt dann zu einer einfachen Parallelverschiebung der Auslösezeiten im Vergleich zu dem Fall, bei dem diese Zeit zwischen Aufprall und Überschreiten der Rauschschwelle nicht berücksichtigt werden würde.

Alternativ ist es vorteilhafter Weise möglich, die Dauer bis zur Überschreitung der Rauschschwelle abhängig von der Geschwindigkeit zu bestimmen. Dabei wird die Aufprallgeschwindigkeit verwendet. Dies ermöglicht vorteilhafterweise, dass diese Zeit zwischen Aufprall und Überschreiten der Rauschschwelle adaptiv gesteuert wird. Dies ermöglicht eine noch bessere Anpassung an die jeweilige Unfallsituation, wenn die Auslösung der Rückhaltemittel bestimmt wird. Letztlich ist damit das erfindungsgemäße Verfahren, das in einem Algorithmus im Steuergerät Niederschlag findet, genauer in der Bestimmung der entsprechenden Auslösezeiten für die einzelnen Rückhaltemittel. Die Aufprallgeschwindigkeit kann dabei vorteilhafterweise durch eine Precrashsensorik bestimmt werden, beispielsweise mittels einer Video-, Ultraschall-, Radar- oder Lidar-Technologie.

### Zeichnung

Ausführungsbeispiele der Erfindung sind in der Zeichnung dargestellt und werden in der nachfolgenden Beschreibung näher erläutert.

Es zeigen
- Figur 1: den Zusammenhang zwischen Aufprallgeschwindigkeit und Auslösezeit,
- Figur 2: den Zeitablauf von Aufprall und Überschreiten der Rauschschwelle,
- Figur 3: ein weiteres Diagramm, das den Zusammenhang zwischen Aufprallgeschwindigkeit und Auslösezeit darlegt,
- Figur 4: ein drittes Diagramm, das den Zusammenhang zwischen Aufprallgeschwindigkeit und Auslösezeit beschreibt,
- Figur 5: ein Blockschaltbild einer erfindungsgemäßen Vorrichtung,
- Figur 6: ein Flussdiagramm des erfindungsgemäßen Verfahrens und
- Figur 7: ein viertes Diagramm für den Zusammenhang zwischen Aufprallgeschwindigkeit und Auslösezeit.

### Beschreibung

Bei Systemen zur Berechnung von Auslösezeiten für Rückhaltesysteme wird eine Schwellenfunktion verwendet, die mit einem von einem Beschleunigungssignal abgeleiteten Signal verglichen wird. Dieses Signal kann das Beschleunigungssignal selbst sein, oder aber auch das integrierte Beschleunigungssignal, also das Geschwindigkeitssignal.

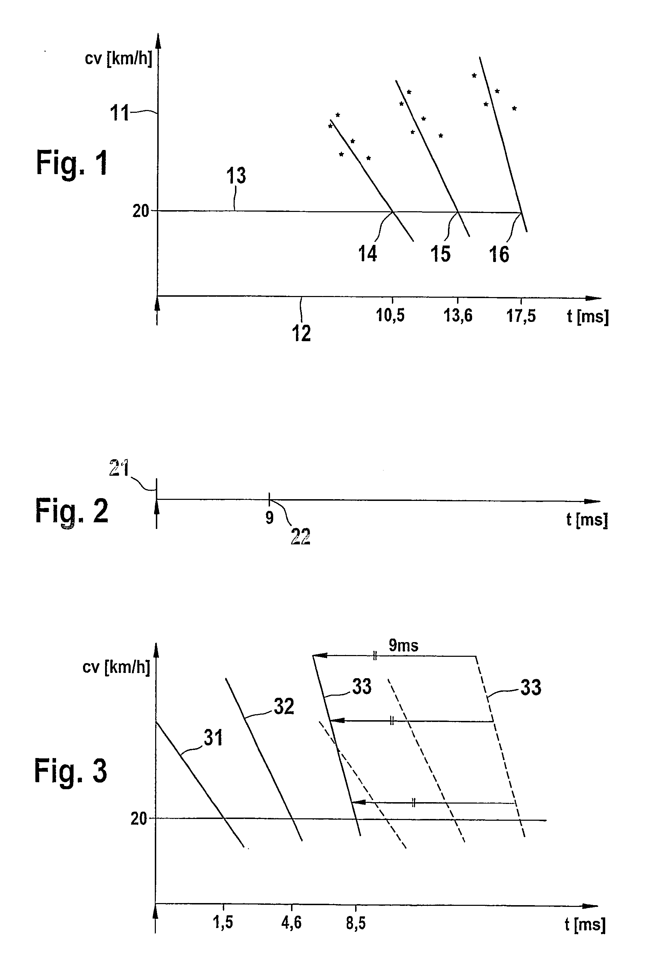

Auf der Grundlage von einer Reihe von Crashtests werden Crashklassen aufgestellt. Dabei ist es möglich, Crashklassen mit ähnlichen Auslösezeiten zu sogenannten Auslöseklassen zusammenzufassen. Dann wird der Zusammenhang zwischen der Geschwindigkeit und der Auslösezeit für die einzelnen Auslöseklassen festgelegt. Dies geschieht dadurch, dass für die Crashklassen, für die viele Crashtests vorliegen, dieser Zusammenhang aus den Daten extrahiert wird. Dieser extrahierte funktionale Zusammenhang kann beliebig, beispielsweise eine parametrisierbare lineare Funktion sein. Ein Beispiel gibt hierzu Figur 1. Figur 1 ist ein Auslösezeit-Aufprallgeschwindigkeits-Diagramm. Auf der Abszisse findet sich die Auslösezeit 12 in Millisekunden und auf der Ordinate die Aufprallgeschwindigkeit cv 11 in km/h. Es sind hier drei Auslösefunktionen, die man Auslösecharakteristiken nennt, gezeigt. Aus diesen Auslösecharakteristiken werden für bestimmte Geschwindigkeiten, hier für 20 km/h, hier mit dem Bezugszeichen 13 gezeigt, Auslösezeiten tₐᵤₛ extrahiert. Es ergeben sich hier für die drei Auslösecharakteristiken die Auslösezeiten 10,5 ms, 13,6 ms und 17,5 ms. Diese sind entsprechend mit den Bezugszeichen 14 bis 16 bezeichnet. Diese Auslösezeiten werden in einer Auslösezeitentabelle abgelegt. Die Auslösezeiten dienen der Schwellfunktion als Stützstellen, an denen jeweils ein Schwellwert abgelegt ist. Der Vergleich zwischen dem Beschleunigungssignal oder einem vom Beschleunigungssignal abgeleiteten Signal und der Schwellfunktion findet jeweils an diesen Stützstellen statt, d.h. es wird überprüft, ob diese Schwellfunktion überschritten worden ist. Falls die Schwellfunktion überschritten worden ist, wird zu diesem Zeitpunkt das Rückhaltemittel ausgelöst, falls die Schwellfunktion nicht überschritten worden ist, wird das Rückhaltemittel nicht ausgelöst und das Signal wird weiter bis zur nächsten Stützstelle der Auslösezeit beobachtet. Die Signalverarbeitung beginnt nach einer Rauschschwellenüberschreitung des Beschleunigungssignals. Dieser Zeitpunkt ist aber einige Millisekunden nach dem eigentlichen Kontakt des Fahrzeugs mit dem Unfallgegner. Dieser Sachverhalt entsteht dadurch, dass bei einem Unfall zuerst die weichen Teile des Autos eingedrückt werden und das Beschleunigungssignal sich dabei nicht stark genug verändert, um die Rauschschwelle zu überschreiten. Die Rauschschwelle wird erst überschritten, wenn die harten Teile des Autos erreicht werden und das ist erst mehrere Millisekunden nach dem ersten Kontakt.

Figur 2 visualisiert diesen Unterschied. Auf einem Zeitstrahl in Millisekunden ist dargelegt, dass zum Zeitpunkt 21 der Kontakt stattfindet, während erst zum Zeitpunkt 22 nach 9 ms die Rauschschwelle überschritten wurde. Damit ist klar, dass die Auslösecharakteristiken nicht mehr genau stimmen, wenn die Zeit ab der Rauschschwelle als Aufprallzeitpunkt verwendet wird. Insbesondere bei einem langsamen Crash auf eine weiche Barriere ist dies von besonderer Bedeutung.

Erfindungsgemäß wird daher im erfindungsgemäßen Verfahren es vorgesehen, bei der Bestimmung der Auslösezeit für die entsprechenden Rückhaltemittel die Zeit, die zwischen dem Aufprall und dem Überschreiten der Rauschschwelle vergeht, zu berücksichtigen. Dies kann zunächst dadurch berücksichtigt werden, dass ein fester Offset bei der Bestimmung der Auslösezeiten berücksichtigt wird, also eine Parallelverschiebung der Auslösezeiten stattfindet, d.h. die Auslösezeiten werden geringer, als sie im erfindungsgemäßen Verfahren zunächst ausgerechnet werden. Dies wird in Figur 3 visualisiert. Figur 3 zeigt ebenfalls ein Diagramm der Aufprallgeschwindigkeit über der Auslösezeit. Wiederum sind die drei Auslösecharakteristiken 31, 32 und 33 angegeben, die nunmehr um 9 ms gemäß Figur 2 als Zeit zwischen dem Kontakt und der Rauschschwellenüberschreitungszeit derart parallel verschoben werden, dass die Auslösezeiten 1,5, 4,6 und 8,5 ms betragen, also genau jeweils 9 ms weniger. Die Auslösecharakteristiken 33alt und 33 geben genau diese Parallelverschiebung wieder. Dabei kann ein empirischer Mittelwert, hier 9 ms, verwendet werden, der für das jeweilige Fahrzeug charakteristisch ist.

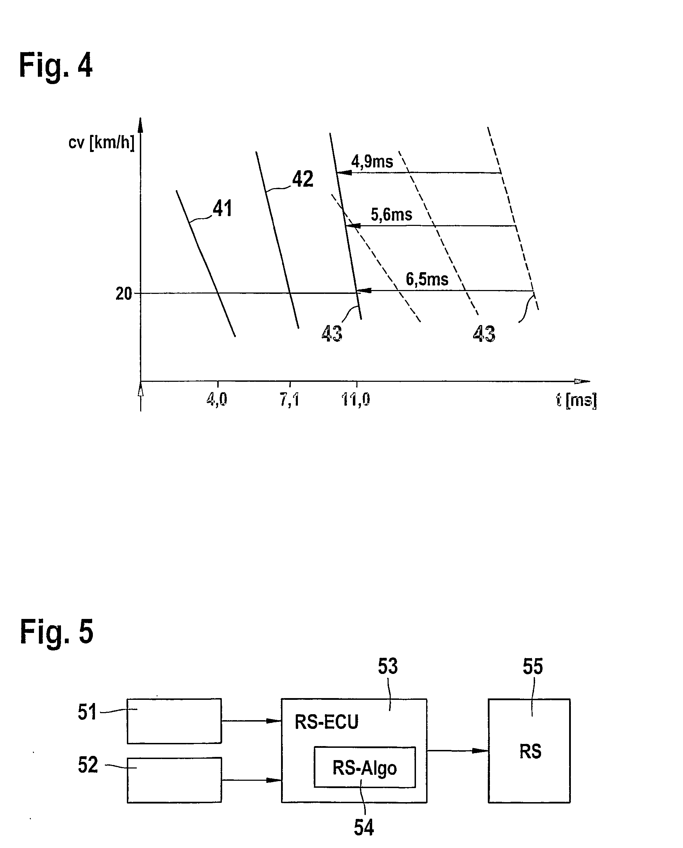

In einer Weiterbildung ist jedoch vorgesehen, diese Zeit zwischen Kontakt und dem Überschreiten der Rauschschwelle adaptiv zu bestimmen. Dazu wird die Aufprallgeschwindigkeit verwendet, da sie der bestimmende Parameter ist, der für das jeweilige Fahrzeug die Zeit zwischen Kontakt und Überschreiten der Rauschschwelle bestimmt. Dies ist leicht einzusehen, da umso schneller der Unfallgegner auf das Fahrzeug prallt, umso kürzer wird die Zeit zwischen dem ersten Kontakt und dem Überschreiten der Rauschschwelle sein, da das Fahrzeug nunmehr schneller auf die harten Teile des Fahrzeugs trifft. Damit ist es möglich, wie Figur 4 visualisiert, dass sich die Auslösefunktion sowohl in der Lage, als auch in der Steigung verändern. Wiederum ist ein Aufprallgeschwindigkeit-Auslösezeit-Diagramm dargestellt. Die Auslösecharakteristiken 41,42,43 haben sich nun für die unterschiedlichen Aufprallgeschwindigkeiten sowohl in der Lage, als auch in der Steigung verändert. Für die dritte Auslösecharakteristik 43 ist dies hier im Detail dargestellt. Für 20 km/h als Aufprallgeschwindigkeit wurde eine Rauschschwellenüberschreitungszeit von 6,5 ms ermittelt, während für einen höheren Wert, beispielsweise für 30 km/h ein Wert von 5,6 ms und für 40 km/h ein Wert von 4,9 ms bestimmt wurde. Dadurch hat sich sowohl die Lage, als auch die Steigung der Auslösecharakteristik verändert und damit auch die entsprechenden Auslösezeiten, die nunmehr 4 ms, 7,1 ms und 11 ms betragen, und zwar für eine Aufprallgeschwindigkeit von 20 km/h. Dadurch wird der Fehlereinfluss, der durch die Differenz zwischen Kontaktzeitpunkt und Überschreiten der Rauschschwelle hervorgerufen wird, verringert und damit ist eine noch genauere Bestimmung der Auslösezeiten für die jeweiligen Rückhaltemittel möglich.

Figur 5 zeigt in einem Blockdiagramm eine erfindungsgemäße Vorrichtung. Als Sensor zur Bestimmung der Aufprallgeschwindigkeit dient hier ein Precrashsensor 51. Dieser Sensor ist an einen Dateneingang eines Steuergeräts für ein Rückhaltesystem 53 angeschlossen. Im Steuergerät läuft ein Auslösealgorithmus 54 auf einem dort angeordneten Prozessor, beispielsweise einem Mikrocontroller. Zur Bestimmung des Aufprallsignals dient hier ein Beschleungiungssensor 52, der ebenfalls an das Steuergerät 53 angeschlossen ist. Beispielhaft sind hier jeweils nur ein Precrashsensor 51 und ein Beschleunigungssensor 52 dargestellt. Es ist jedoch möglich, mehrere dieser Sensoren vorzusehen, auch im Steuergerät 53 selbst können, beispielsweise zur Plausibilisierung Beschleunigungssensoren in unterschiedlichen Richtungen angeordnet sein. Es ist auch möglich, eine kinematische Sensorplattform vorzusehen, bei der Sensoren in unterschiedlichen Raumrichtungen angeordnet sind. Das Aufprallsignal kann alternativ auch mit einem anderen Sensor als einem Beschleunigungssensor bestimmt werden, beispielsweise durch einen Druck-, Temperatur- oder andere Verformungssensoren. Der Algorithmus 54 bzw. das Steuergerät 53 steuert dann die Rückhaltemittel 55. Diese Rückhaltemittel 55 sind beispielsweise Airbags, vorzugsweise mit mehreren Stufen, und Gurtstraffer oder auch ein Überrollbügel. Die Verbindung zwischen den einzelnen Komponenten kann über eine Busverbindung oder über jeweilige Zweidrahtverbindungen oder einer Kombination aus diesen Verbindungstechniken realisiert sein.

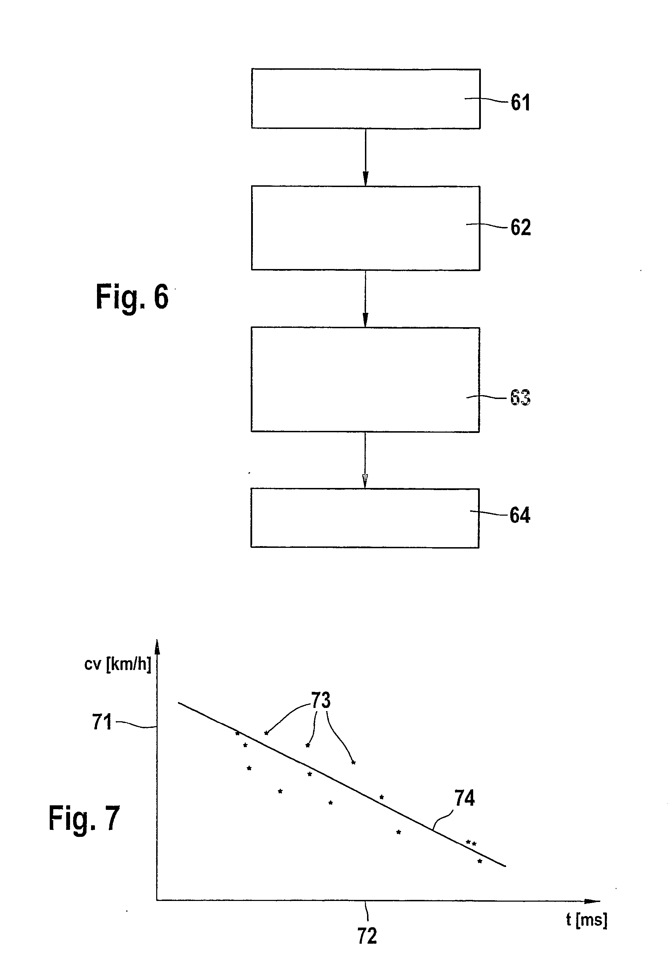

Figur 6 zeigt in einem Flussdiagramm das erfindungsgemäße Verfahren, das angewendet werden muss, um die Auslösecharakteristiken derart zu verändern, dass die Zeiten bis zur Rauschschwellenüberschreitung berücksichtigt werden. Diese neuen Auslösecharakteristiken dienen dann als Basis für den im Steuergerät 53 ablaufenden Algorithmus 54. Auf der Grundlage des im Verfahrensschritt 61 gegebenen Sets von Crashtests werden im Verfahrensschritt 62 die Zeiten, die bis zur Rauschschivellenüberschreitung benötigt werden, extrahiert. Im Verfahrensschritt 63 werden, wie in Figur 7 gezeigt, wiederum einem Aufprallgeschwindigkeit-Auslösezeit-Diagramm, diese Zeiten 72 mit den zugehörigen Aufprallgeschwindigkeiten 71 in ein Diagramm eingetragen. Mit diesen Werten 73 wird nun eine Regressionskurve 74 durch Polynomapproximation, hier im Beispiel linear, oder Interpolation ermittelt. Aus dieser Funktion werden dann die jeweiligen Werte für jede Geschwindigkeit herausgelesen und mit der zugehörigen Spalte der Auslösezeitentabelle abgezogen. Dies erfolgt im Verfahrensschritt 64. Durch diese Subtraktion werden die möglichen Auslösezeiten vorversetzt. Wie in Figur 4 gezeigt entspricht dieses Vorverschieben der Auslösefunktionen 41, 42, 43 zum Beispiel bei einer Geschwindigkeit von 20 km/h ungefähr 6,5 ms, wie sich aus dem Vergleich von 43alt und 43 ergibt. Dadurch werden die 9 Millisekunden, die bis zur Überschreitung der Rauschschwelle benötigt werden, annähernd mit einbezogen. In den bisherigen Auslösezeitberechnungen wurde bei den Auslösezeiten nichts abgezogen, d.h. die zusätzlichen 9 ms nach dem Crash wurden nicht beachtet. Die anderen Ansätze, wie in Figur 3 dargestellt, bei denen die Auslösefunktionen 31, 32, 33 um einen festen Wert verschoben werden, wie beispielsweise 33alt zu 33, werden auch diese Zeit berücksichtigen. Es wird aber nicht beachtet, dass diese Zeiten mit der Geschwindigkeit variieren können.

## Patentansprüche

1. Verfahren zur Auslösung von Rückhaltemitteln (55), wobei die Rückhaltemittel (55) in Abhängigkeit von einem Aufprallsignal ausgelöst werden, wobei eine Signalverarbeitung des Aufprallsignals begonnen wird, wenn das Aufprallsignal eine Rauschschwelle überschreitet, wobei die Rauschschwelle bei 3- 6 g liegt, **dadurch gekennzeichnet, dass** bei einer Bestimmung einer Auslösezeit für ein jeweiliges Rückhaltemittel eine Zeit, die das Aufprallsignal ab einem Aufprallzeitpunkt benötigt, um die Rauschschwelle zu überschreiten, berücksichtigt wird.

2. Verfahren nach Anspruch 1, **dadurch gekennzeichnet, dass** die Zeit durch einen festen Offset berücksichtigt wird.

3. Verfahren nach Anspruch 1, **dadurch gekennzeichnet, dass** die Zeit in Abhängigkeit von einer Aufprallgeschwindigkeit und einem Crashtyp bestimmt wird.

4. Verfahren nach Anspruch 3, **dadurch gekennzeichnet, dass** die Aufprallgeschwindigkeit mittels eines Precrashsensors (51) bestimmt wird.

## Claims

1. Method for triggering restraining means (55), the restraining means (55) being triggered as a function of an impact signal, signal processing of the impact signal being started if the impact signal exceeds a noise threshold, the noise threshold being 3-6 g, **characterized in that** when a triggering time is determined for a respective restraining means a time which the impact signal requires to exceed the noise threshold starting from an impact time is taken into account.

2. Method according to Claim 1, **characterized in that** the time is taken into account by a fixed offset.

3. Method according to Claim 1, **characterized in that** the time is determined as a function of an impact speed and a crash type.

4. Method according to Claim 3, **characterized in that** the impact speed is determined by means of a precrash sensor (51).

## Revendications

1. Procédé de déclenchement de moyens de retenue (55), selon lequel ce déclenchement a lieu en fonction d'un signal d'impact dont le traitement commence quand le signal d'impact dépasse un seuil de bruit qui est compris entre 3 et 6 g,
**caractérisé en ce que**
dans la détermination du temps de déclenchement pour chaque moyen de retenue, on prend en compte un temps qui à partir de l'instant de l'impact, est nécessaire au signal d'impact pour dépasser le seuil de bruit.

2. Procédé selon la revendication 1,
**caractérisé en ce que**
le temps est pris en compte par un décalage fixe.

3. Procédé selon la revendication 1,
**caractérisé en ce que**
le temps est déterminé en fonction d'une vitesse d'impact et d'un type de crash.

4. Procédé selon la revendication 3,
**caractérisé en ce que**
la vitesse d'impact est déterminée au moyen d'un capteur de précrash (51).
